(19)

Europäisches Patentamt
European Patent Office
Office européen des brevets

(11)  **EP 2 365 412 B1**

(12)  **EUROPEAN PATENT SPECIFICATION**

(45) Date of publication and mention
of the grant of the patent:
**03.10.2012  Bulletin 2012/40**

(51) Int Cl.:
*G05D 7/06* (2006.01)       *F16K 47/08* (2006.01)

(21) Application number: **11164165.0**

(22) Date of filing: **24.02.2005**

(54) **Flow restrictor**

Drosselkörper

Limiteur de débit

(84) Designated Contracting States:
**AT BE BG CH CY CZ DE DK EE ES FI FR GB GR HU IE IS IT LI LT LU MC NL PL PT RO SE SI SK TR**

(30) Priority: **27.02.2004  US 548109 P**

(43) Date of publication of application:
**14.09.2011  Bulletin 2011/37**

(62) Document number(s) of the earlier application(s) in accordance with Art. 76 EPC:
**05723513.7 / 1 721 227**

(73) Proprietor: **Horiba Stec, Co., Ltd.**
**Kyoto**
**601-8116 (JP)**

(72) Inventors:
• **Mudd, Daniel T**
**Sparks, NV 89431 (US)**
• **White, William W.**
**Sparks, NV 89431 (US)**

• **Miller, Virginia**
**Sparks, NV 89431 (US)**
• **Davis, Christopher**
**Richardson, TX 75081 (US)**
• **Miyoshi, Kimura**
**Minami-ku**
**Kyoto 601-8116 (JP)**
• **Yasuda, Tadahiro**
**Minami-ku**
**Kyoto 601-8116 (JP)**

(74) Representative: **Style, Kelda Camilla Karen**
**Page White & Farrer**
**Bedford House**
**John Street**
**London, WC1N  2BF (GB)**

(56) References cited:
**EP-A2- 1 552 200       US-A- 6 039 076**
**US-A1- 2003 034 074     US-A1- 2004 083 807**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 365 412 B1

## Description

This application claims priority from co-pending U.S. Provisional Patent Application Serial No. 60/548,109 filed February 27, 2004 the disclosures of which application is incorporated herein by reference. This application is also a continuation-in-part of co-pending US Application No: 10/652,506, by Daniel Mudd et al. titled "Higher accuracy pressure based flow controller," which claims priority from Provisional Application Serial No. 60/406,511 filed August 28, 2002, the contents of both applications which are incorporated by reference.

This disclosure teaches techniques related to flow restrictors which are used for flow rate measurement, for example, as part of a mass flow controller. The disclosed teachings help in providing a flow path in the flow restrictor that is clean and formed without variation in its performance.

Introduction

Flow restrictors are used in many applications including in mass flow controllers. Conventional flow restrictor consists of sintered alloy metal or a filter, in which their flow resistance cannot be controlled in the manufacture process against the allowable design value range in performance. A designer often needs to select a suitable flow restrictor from off the shelf manufactured ones to obtain proper flow restrictors. Furthermore, the flow restrictors can show a non-linear characteristics in use of flow measurement.

The conventional flow restrictors are built of sintered alloy metal or mesh-like elements. These flow restrictors are used as a buffer in flow pressure for flow control equipment. For example, flow meters could take advantage of the differential pressure and flow characteristics of the flow restrictors.

For this type of flow restrictors made of sintered alloy material, it is difficult to control the degree of porous density. Further, such products must be selected from off-the shelf manufactured products to obtain a certain specific range of flow resistance.

Problems in conventional sintered flow restrictors

Sintered elements are believed to be not as clean as restrictor designs in thermal mass flow controllers.

The performance of the sintered elements often deteriorates at flows above 5 SLM. The sintered element restrictors lose a significant portion of the desirable non-linearity as the flow through it takes on a sonic (rather than laminar) characteristic. This is because of the increased hydraulic diameters used by the higher flow through flow restrictors.

The sintered elements often do not operate at lower inlet pressures to the mass flow controllers. This would necessitate a higher inlet pressure, which is often a barrier to wide spread acceptance in the existing market place. A lower pressure drop is therefore desired.

The disclosed teachings provide techniques for overcoming some of the disadvantages and securing some of the advantages noted above in related art flow restrictors and mass flow controllers.

According to another aspect there is disclosed a flow restrictor comprising at least one first disk which has at least one inlet and at least one outlet defining a flow path, and at least one second disk, which has no flow path, placed either side of said at least one first disk, wherein the flow restrictor is non-sintered, and wherein the inlet, the outlet and said flow path comprise a through hole which is formed in said at least one first disk, wherein a cross-sectional area of the flow path is controlled by a thickness of the at least one first disk.

Preferably the through hole is formed by etching. Preferably a cross-sectional area of the flow path is constant.

The above objectives and advantages of the disclosed teachings will become more apparent by describing in detail preferred embodiments thereof with reference to the attached drawings in which:

Fig.1(a)-(c) shows an exemplary embodiment of the disks
Fig. 2 shows an exemplary embodiment of the stacked disk restrictor.

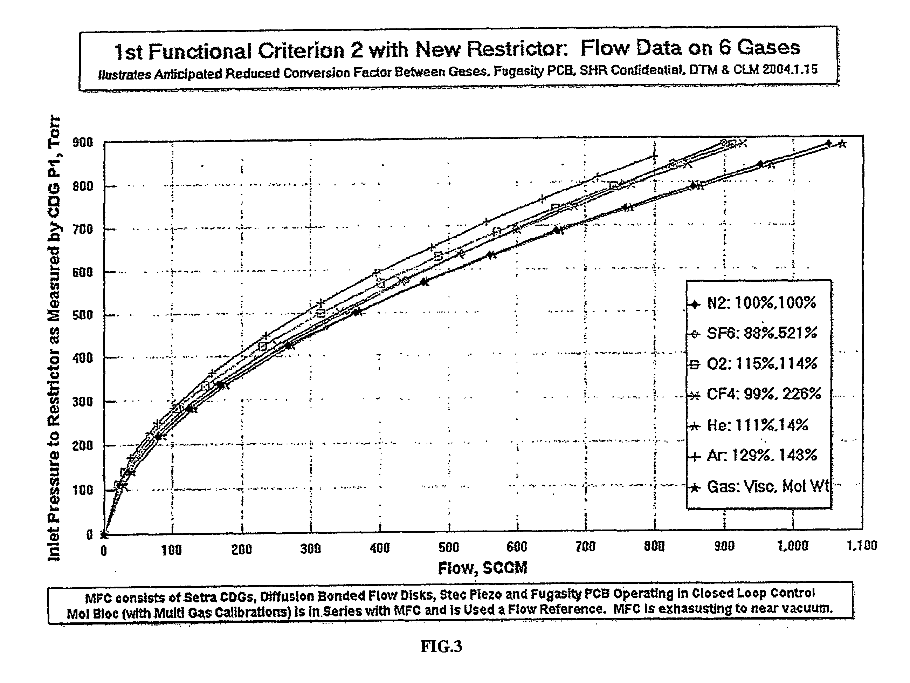

Fig.3 shows a graph depicting flow data for an exemplary embodiment of an MFC with a stacked restrictor for six gases.
Fig. 4(a)-(c) shows exemplary embodiments of three example flow disks.
Fig.5 shows a table depicting some possible example combination of restrictor types.
Fig. 6. shows data for a porous metal restrictor and a tube restrictor for comparison.
Fig.7 illustrates the flow non-linearity and variability of 10 pieces of the example F1_24 disks before diffusion bonding.
Fig.8A illustrates the non-linearity and variability of another type of disk prior to diffusion bonding.
Fig. 8B shows data from another exemplary embodiment of the #2 disk where the performance is significantly improved to within 1% of reading band.
Fig. 9 illustrates the Flow Curve and Variability for a sintered element disk restrictor for comparison.

Fig.10 illustrates the post diffusion bonding of a 300 SCCM restrictor.

Fig.11 illustrates the post diffusion bonding of a 900 SCCM restrictor, 3 pieces of 300 sccm disk stacked in the restrictor.

Figs. 12A-B show restrictor to restrictor variation in the same flow category.

Fig.13 shows results of a where a mass flow controller was built using a 900 sccm restrictor and run on 6 gases with the same calibration and set points.

Fig. 14 shows two graphs depicting the test and simulation results for exemplary embodiments of the disclosed disk restrictors.

The disclosed non-sintered flow restrictor has a flow path which is formed to correspond to the thickness of bright steel sheet. The flow path is formed by etching process. One such sheet with a flow path is overlayed with another sheet with no etching path. This kind of flow path elements are piled up like a sandwich to obtain a desired flow rate. The flow path element in disk shape is attached to the element without the flow path using diffusion bonding.

In an exemplary embodiment, the cross-sectional area of the flow path, also called as a window, is determined by the sheet thickness and the depth of etching in the sheet thickness. By decreasing or increasing the number of such windows, the adjustment of flow rate and differential pressure across the flow restrictor can be controlled. Further, change in the width of etching and sheet thickness can control the cross sectional area of the flow path.

Flow rate and differential pressure across the flow restrictor can also be controlled by increasing or decreasing the number of the etched sheets and sheet thickness.

Such a flow restrictor has a non-linear characteristics which allow its operation in the low flow rate range, resulting in decreasing the error in pressure measurement by pressure gauges that operate at low pressures. Such a flow restrictor is applicable for all fluid materials, and is can be used in a various combination with pressure gauges for fluid flow measurement.

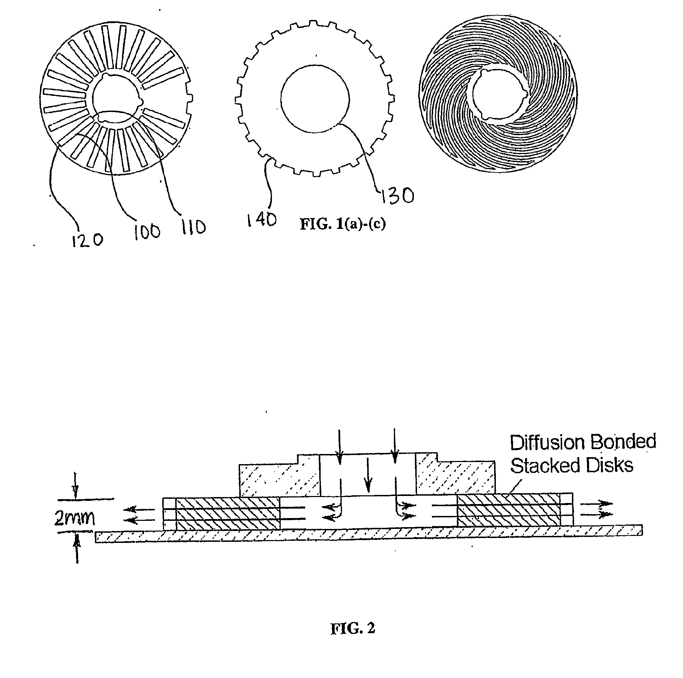

An exemplary embodiment is shown in Fig. 1. The illustrated embodiment of the disclosed stacked disk restrictor is composed of flow disks and spacer disks. Flow disks have sections (for example section 100) of it completely etched through. These etched away sections are typically constant width and extend from an inner location 110 to an outer location 120.

Spacer disks (Fig. 1(b)) do not have etched through sections. They are placed on either side of the flow disk as shown in Fig. 2. A flow path is formed by the etched section of the flow disk bounded by the spacer disk immediately above and below the flow disk. Spacer disk typically have an ID 130 that is larger than the beginning location of the flow path 110 and OD that is smaller than the ending location of the flow path 120 to allow gas to enter and exit the flow path.

Such through etched flow disk combined with spacer disks provides better control of the flow path hydraulic diameter. As a corollary better control is also achieved of variations from restrictor to restrictor.

An alternative implementation is a flow disk with flow disks that are not linear in nature but rather follow a curved flow path as shown in Fig. 1(c). This could maximize the length of the flow path(s) given a limited diameter flow disk.

In yet another alternate embodiment, an optimal geometry where the flow path follows a pattern of an Archimedes spiral, (ie polar notation r = d alpha) is used.

In another embodiment dominantly compressible laminar flow is achieved causing the device to display the beneficial non-linearity. This allows a wider dynamic.

In an exemplary embodiment, a single flow path or multiple flow paths are layed out on a single disk. The flow paths may or may not be identical. The multiple disks are then stacked together with spacer disks alternating between flow disks. This provides a basis for the making of several different restrictors that span a large dynamic range. Such an available dynamic range reduces the needed calibration effort.

As noted above, multiple flow disks could be etched on a single sheet retained by small tabs. The sheets could include tooling holes common to both flow disks and spacer disks.

The flow disks and spacer disks are aligned by tooling pins to assure correct location of the disks relative to each other. The sheets are spot welded or held by other means to hold them in position until they are diffusion bonded together in proper relative location.

In alternate embodiments the disks could be held together by other means (for example, mechanical clamping) other than diffusion bonding.

Clamped mechanisms have fayed surfaces that outgas undesirable gases or dry down slowly. Diffusion bonding of the disks bonds the metal surfaces together avoiding the undesirable fayed surfaces.

Recommend disk over 0.002" thick could be annealed to minimize grain growth during process and disk below 0.002" could be 50% or more work hardened to improve stiffness of disks thereby improving handling.

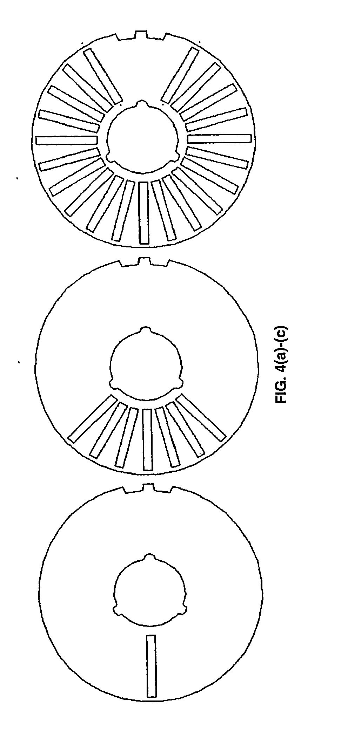

As noted above, the disk restrictor consists of flow disk alternately placed between spacer disks. Three example flow disks are shown in Fig. 4. They vary only in the number of flow paths on each disk. Disks F1.1, F1.8 and F1.22 are shown in Figs. 4(a)-(c).

Depending on the desired flow rating of the restrictor 1 to three of these flow disk are included to build all the exemplary restrictors sizes 2,500 SCCM and below. In such an example configuration, smallest 40 SCCM restrictor will have 1 flow path while the 2,500 sccm restrictor will have 66 paths.

For higher flows more flow disks are stacked, the 10 SLM had 264 paths, but all restrictor stack 10 SLM down are 2mm tall allowing interchangeability in the same MFC base.

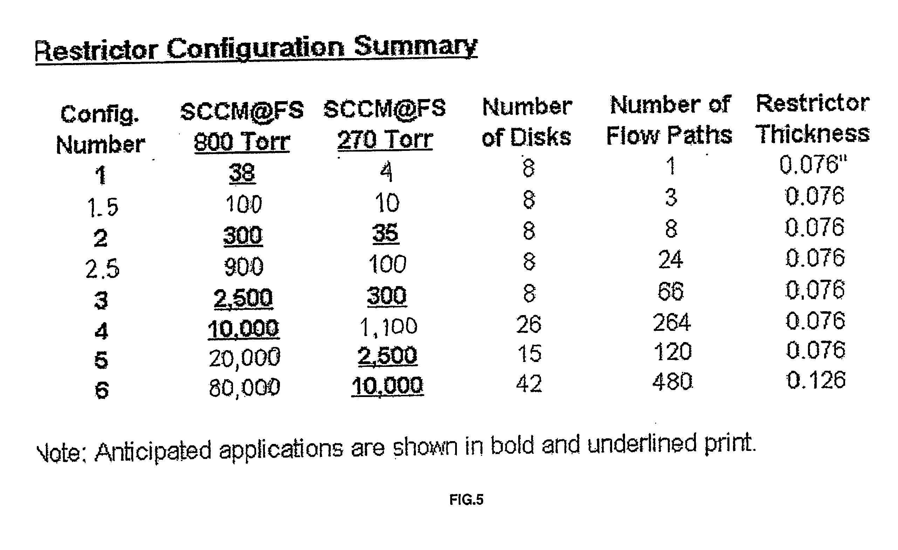

Fig. 5 shows a table illustrating the type of example restrictors.

Such a restrictor design provides non-linear flow and also provides for compressible flow. In comparison, the laminar flow elements of thermal MFC are designed for small pressure drops where the pressure drop across the LFE is not significant compared to the line pressure. In such thermal MFCs, the gas density does not change significantly along its path and the flow can be considered incompressible.

In laminar flow, viscous forces dominate and are proportional to the shear velocity between the parallel flow lines. For incompressible flow, this proportional viscous relationship results in the simple familiar linear relationship between pressure drop and flow rate that are well known with standard thermal MFCs. For example, doubling the flow doubles the pressure drop across the element.

With compressible flow, this simple linear relationship no longer applies. However, the non-linear relationship between flow, inlet and exhaust pressure can be simulated with good results by combining simple incompressible flow theory with a finite difference methodology. Development of general governing equations is achieved by observing simulation results and applying engineering superposition of conditions to determine the effect of exhaust pressures.

The results of an analysis of an ideal laminar flow element under compressible flow are summarized below.:

1. Mass flow into a vacuum equals a geometric constant times the square of the absolute inlet pressure.

$$M_{vac} = K_{Geo} * K_{gas\ prop\ =\ f(t)} * P^2_{Inlet}$$

2. Mass flow into non vacuum conditions is a function of the square of the absolute inlet pressure and the ratio of the absolute exhaust pressure to the absolute inlet pressure. Specifically, the Non-Vacuum-Exhaust mass flow is reduced by the cosine of the arcsine of this pressure ratio.

$$M_{n\_vac} = M_{vac} * \cos(asin(P_{exh}/P_{inlet})) = K_{Geo} * P^2_{inlet} * \cos(asin(P_{exh}/P_{inlet}))$$

Flow curves obtained from test data on exemplary embodiments of the disk restrictor and the flow curves produced by numeric simulations relying solely on laminar theory supports the conclusion that flow through the disclosed restrictor is dominantly compressible laminar flow.

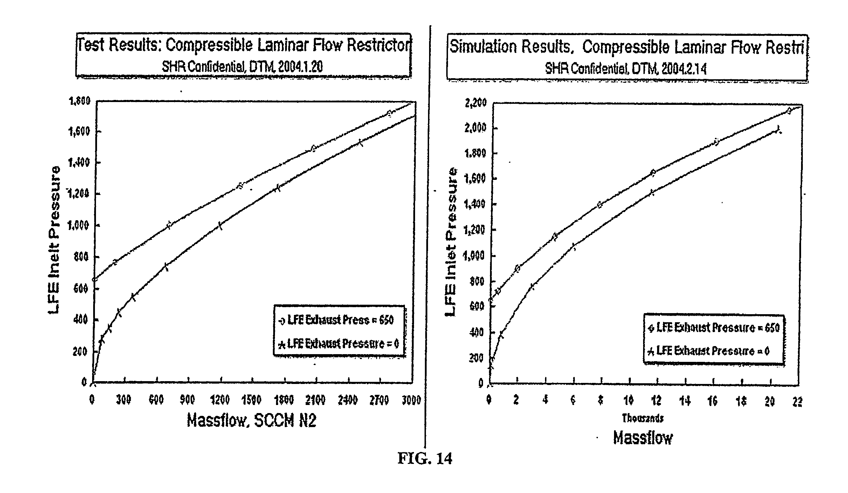

Fig.14 shows two graphs depicting the test and simulation results for exemplary embodiments of the disclosed disk restrictors.

Although the dominant mechanism in disclosed disk restrictor is compressible laminar flow, secondary mechanisms exist and are responsible for deviations between the test data and simulations.

The actual data for the exemplary embodiment is best fit by the equation

$$M_{vac} = K_{Geo} * P^{1.85}_{inlet}.\ \text{as opposed to}$$

$$M_{vac} = K_{Geo} * P^{2.0}_{inlet}$$

This deviation from the ideal equation where the power term, is 1.85 instead of 2.0, is evidence of these mechanisms. Secondary mechanisms not accounted for in the simulation and general equation include:

1. Laminar flow takes a finite distance to fully develop upon entering an LFE. Previous work in the art suggests that laminar flow is not fully developed in a LFE until a distance of 50 hydraulic diameters from the inlet.

2. Even though the Reynolds indicates that gas flow is deeply in the laminar regime, localized disturbances can cause additional parasitic kinetic loses when the potential kinetic energy, a $(1/2)mV^2$ term, due to gas velocity becomes significant. (Additional details may be found in US Patents by Drexel) In such cases, the authors conjecture that this additional kinetic loss to be the cause of the modest deviation in the flow curves of SF6 and CF4 from being scalar multiples (determined solely by relative viscosity) of the lighter gas flow curves as seen below. To account for this effect, a kinetic loss term may be added to the existing simulation to approximate this effect.

3. Finally, laminar flow assumptions begin to deteriorate when the line pressure in a section of the LFE reduces to the point when the mean free path of the gas becomes a significant portion of the hydraulic diameter of the flow path. In such situations, mass flow is reduced compared to pure laminar theory. Estimates of this flow reduction exist and are typically keyed to the ratio of the mean free path of a gas to the hydraulic diameter of the flow path. As such, molecular flow influences might be added to the existing simulation.

If one increases the L/D ratio of a flow path, the laminar forces increase relative to the secondary non-laminar effects. To the extent that the design package size and part cost allow one should maximize this ratio to achieve a restrictor who's performance more closely approaches the ideal laminar flow element.

If one designs the geometry of a restrictor such that it maintain largely laminar flow even at the higher pressure drop of compressible flow one can take advantage of a non-linear flow curve. With this beneficial non-linearity one can develop an mass flow controller which displays a % of Reading Error characteristic as opposed to a % of Full Scale Error characteristic as displayed by thermal MFCs.

The relatively small effective (hydraulic) diameter and long length of the flow paths result in laminar flow which can be maintained even at the higher pressure drops associated with compressible gas flow.

The laminar flow elements of thermal MFC are designed for small pressure drops where the pressure drop across is small compared to line pressure of the restrictor and gas flow can be considered incompressible in such thermal MFCs.

The disclosed structure, however, intentionally promotes compressible flow. As a result of the designs locating the restrictor down-stream of the MFC control valve and exhausting the MFC to vacuum, the pressure drop across the laminar flow element is equal to a large percentage if not 100% of the restrictor's absolute upstream pressure.

To maintain laminar flow with these higher pressure drops requires the effective diameter of the flow path of the compressible laminar flow restrictor to be much smaller than the diameters seen in thermal MFC restrictor designs . The disclosed disk restrictor accomplish this task.

For incompressible laminar flow:

Mass flow, m, equals volumetric flow, Q, times density, r, and is also proportional to pressure drop, dP

$$M = Q * r$$

Density is inversely proportional to absolute pressure, $P_{abs}$, of the Gas

$$r \sim 1/P_{abs}$$

Pressure drop is proportional to volumetric flow times absolute viscosity, m:

$$dP \sim Q * h \text{ therefore } Q \sim dP/m$$

One can substitute and combine terms to obtain:

$$M = K\, dP/m * 1/P_{abs} = K/m * dP/P_{abs}$$

Given that viscosity varies little with pressure and may be considered fixed for a given gas, mass flow becomes proportional to pressure drop and inversely proportional to line pressure.

As and example, for a fixed mass flow the result of reducing the absolute line pressure of the flow would double the pressure drop across the restrictor.

To mentally investigate the characteristics of incompressible laminar flow one can consider compressible flow as a series of incompressible flows in series with the outlet of each successive section the inlet of the next. Also assume the laminar flow element is exhausting to vacuum.

In this case the average line pressure of the series of restrictor sections decreases as the inlet pressure to the restrictor is reduced.

As a result the effective line pressure to the restrictor drops, causing the incremental pressure drop per sccm to increase for the series. This result correlates well with the observed flow characteristics of the disclosed disk restrictors where the slope, torr/sccm, of the flow curve is proportional to the value of the absolute inlet pressure of the restrictor.

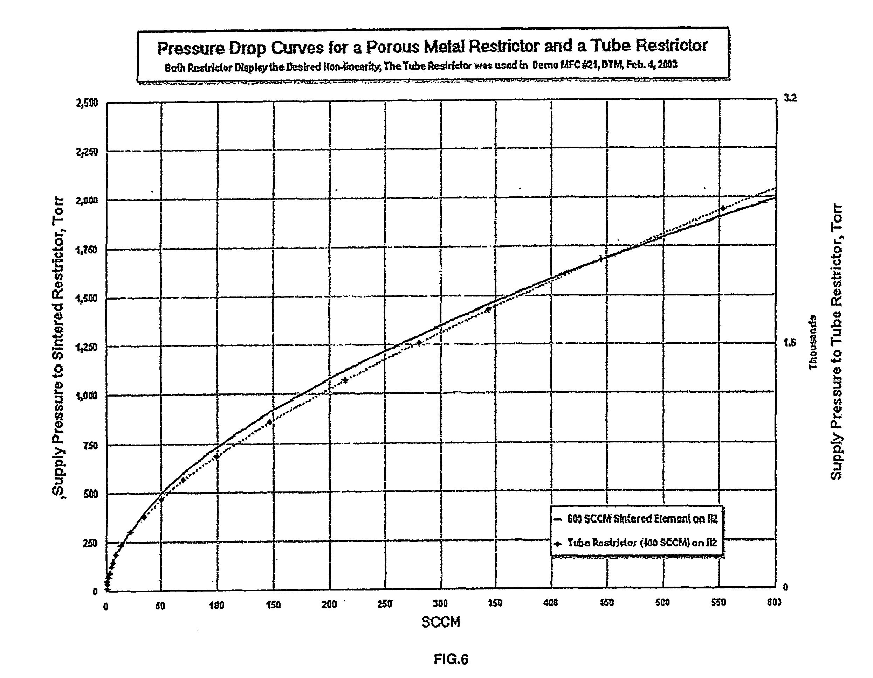

An example disk flow restrictor with a small enough diameter was designed to ensure laminar flow with high pressure drops exhausting to vacuum. The restrictors was placed into a MFC and the flow performance of the restrictor was studied. Fig. 6. shows data for a porous metal restrictor and a tube restrictor for comparison. Restrictor Disk was tested for the beneficial non-linearity, flow rate and variability before and after diffusion bonding.

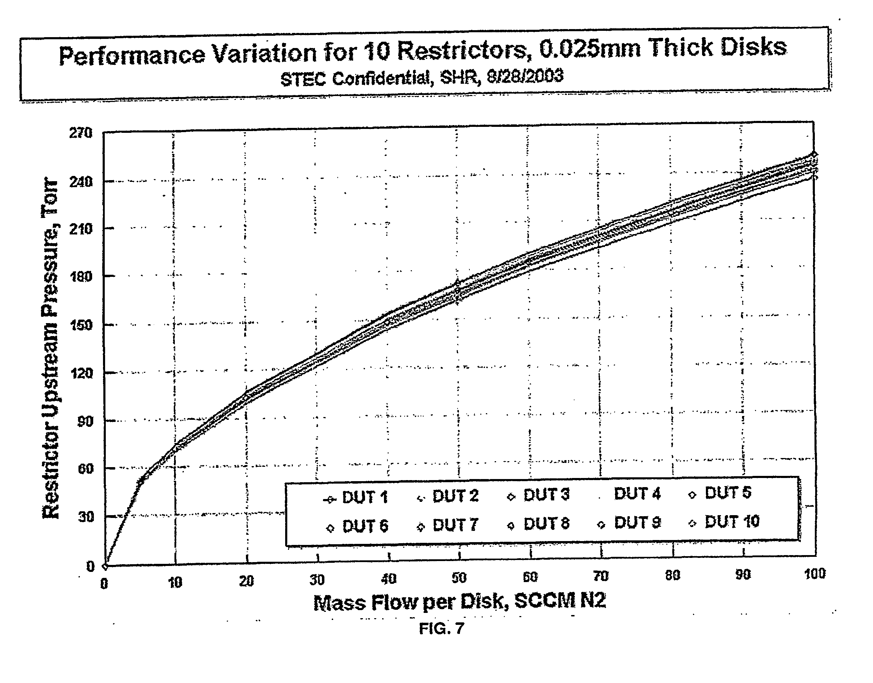

Fig.7 illustrates the flow non-linearity and variability of 10 pieces of the F1_24 disk before diffusion bonding.

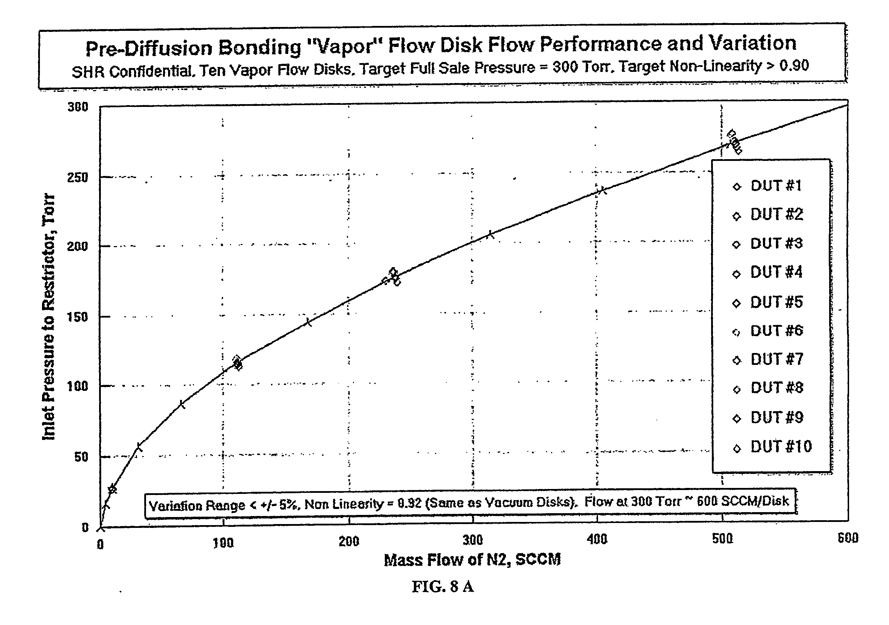

Similarly Fig. 8A illustrates the non-linearity and variability of another type of disk prior to diffusion bonding.

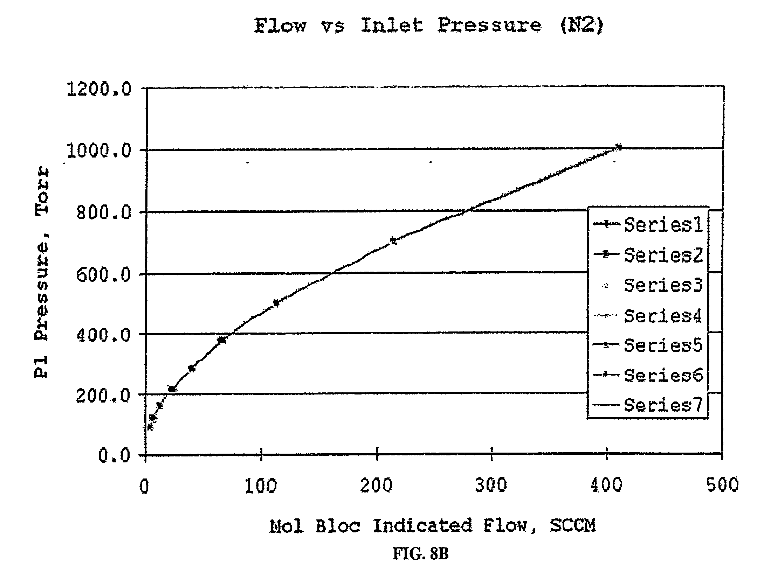

Likewise, Fig. 8B shows data from another exemplary embodiment of the #2 disk where the performance is significantly improved to within 1% of reading band.

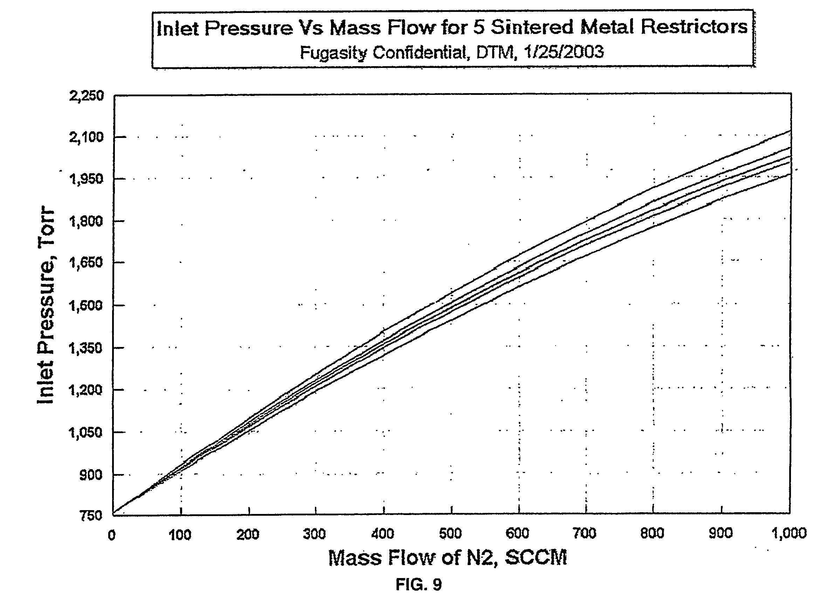

Fig. 9 illustrates the Flow Curve and Variability for a sintered element disk restrictor for comparison.

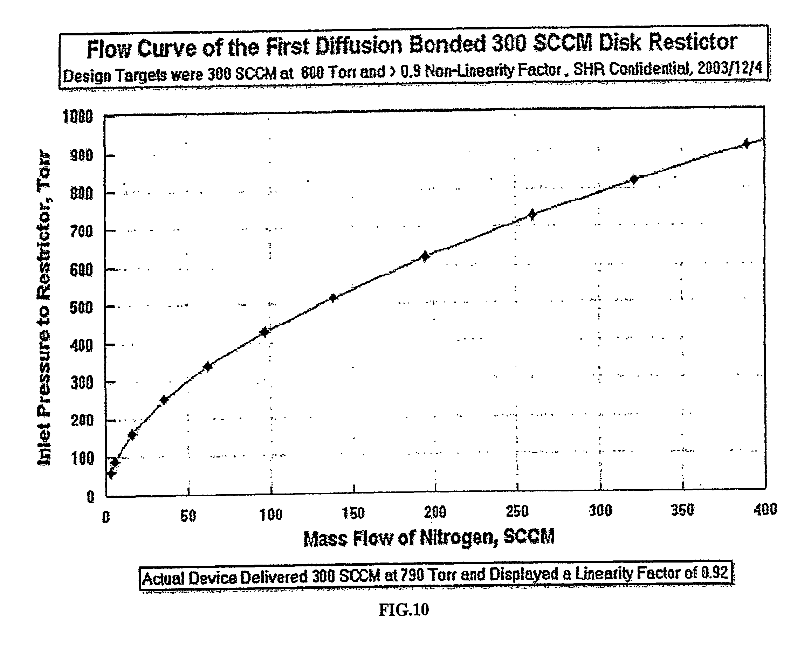

Fig.10 illustrates the post diffusion bonding of a 300 SCCM restrictor. As can be seen the target pressure drop and non-linearity is good.

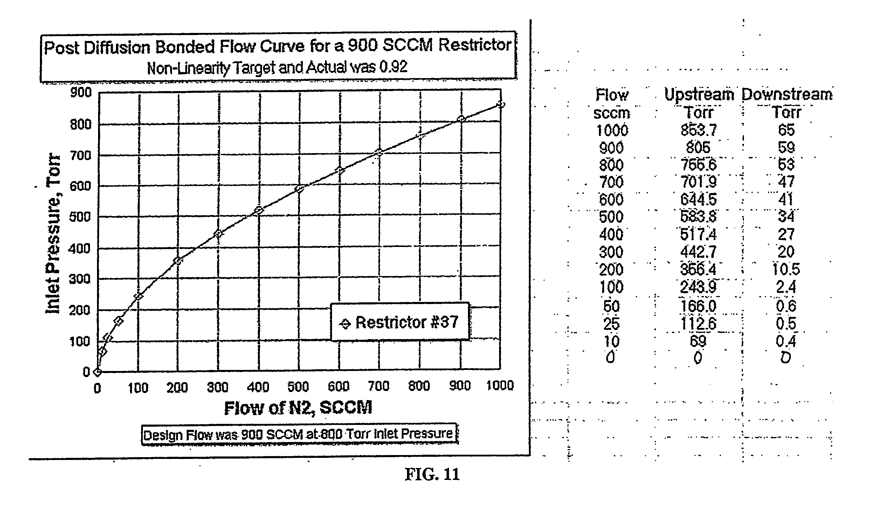

Similarly Fig.11 illustrates the post diffusion bonding of a 900 SCCM restrictor, 3 pieces of 300 sccm disk stacked in the restrictor. This illustrates that vertical stacking does not significantly affect the flow through the restrictor now that press during bonding had been reduced to 500 pounds.

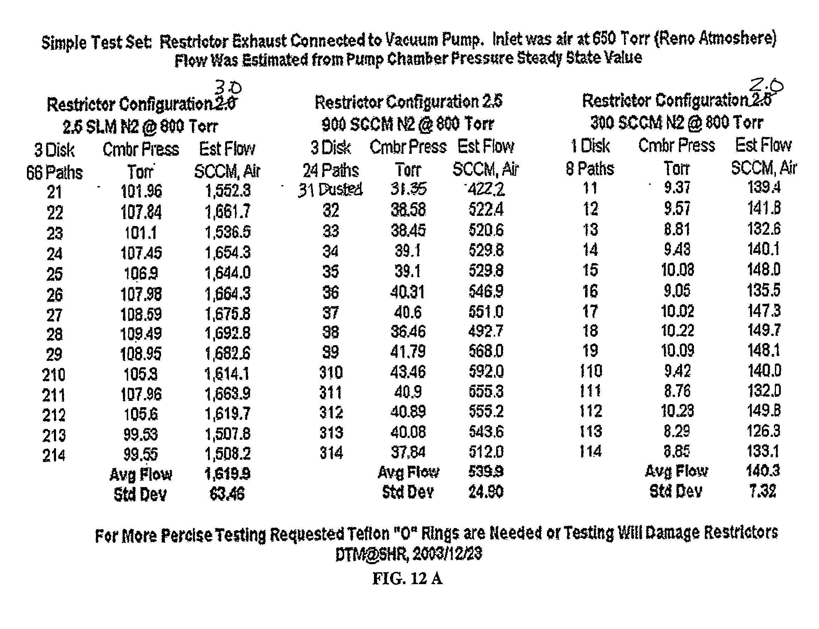

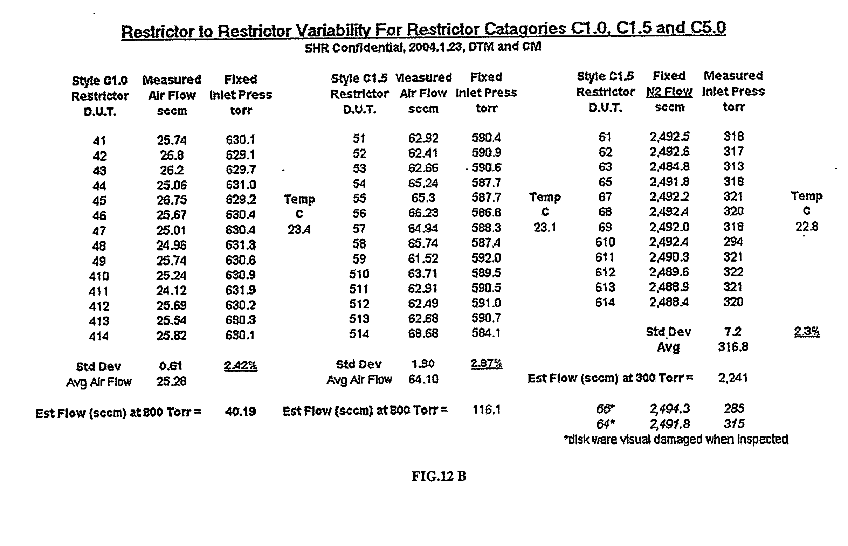

Restrictor to restrictor variation in the same flow category is illustrated for 6 of the 8 restrictor categories in Fig. 12A and 12B. A simple 1-point test was used as testing diffusion bonded restrictors.

As can be seen the standard deviation within a restrictor category is roughly 3% in all 6 categories tested.

As one final test, a mass flow controller was built using a 900 sccm restrictor and run on 6 gases with the same calibration and set points. The flow curves for each gas were collected by queering the MFC for the value of the upstream CDGs pressure reading while exhausting to vacuum. A Mol Bloc was placed in series with the MFC and used as a flow reference. The intent was to verify that the anticipated gas to gas variation over a wide variety of gases would still remain roughly +/-20% as anticipated from laminar theory.

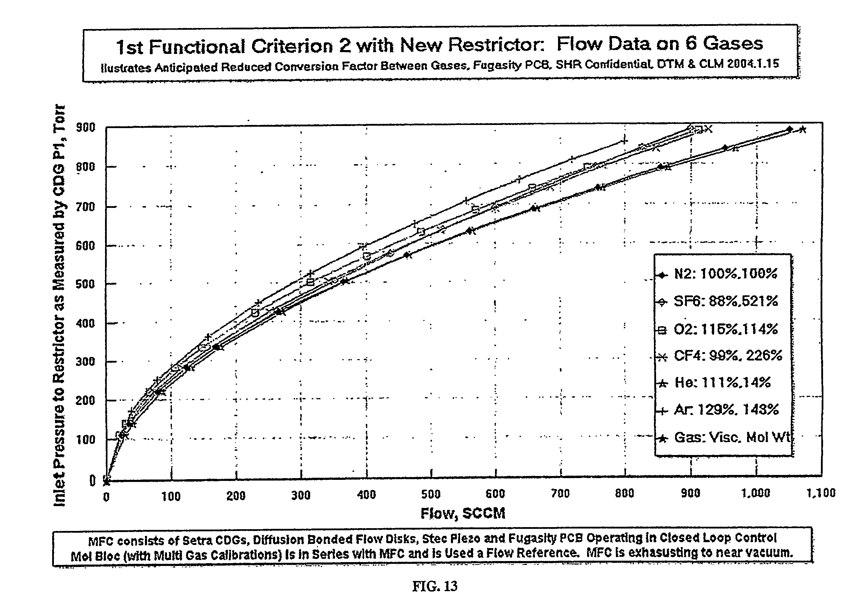

The results are shown in Fig. 13.

As can be seen the variation between markedly different gas types is small as expected and the beneficial non-linearity is present in all cases.

**Claims**

1. A flow restrictor comprising
   at least one first disk which has at least one inlet (110) and at least one outlet (120) defining a flow path, and
   at least one second disk, which has no flow path, placed either side of said at least one first disk; and **characterised in that**
   the flow restrictor is non-sintered, and
   the inlet (110), the outlet (120) and said flow path comprise a through hole (100) which is formed in said at least one first disk and bounded by the second disk immediately above and below the first disk,
   wherein a cross-sectional area of the flow path is controlled by a thickness of the at least one first disk.

2. The flow restrictor of claim 1, wherein the through hole (100) is formed by etching.

3. The flow restrictor of claim 1, wherein a cross-sectional area of the flow path is constant.

4. The flow restrictor of any preceding claim wherein the second disk has an internal diameter that extends outwardly beyond said at least one inlet (110) of said first disk, and an outer diameter that is inward of said at least one outlet (120) of said first disk, to allow a gas to enter and exit the flow path.

5. The flow restrictor of any preceding claim, wherein said at least one first disk comprises a central through hole.

6. The flow restrictor of claim 5, wherein said central through hole of said first disk is spaced from said through hole (100) comprising said inlet (110), said outlet (120) and said flow path.

7. The flow restrictor of any preceding claim, wherein said at least one second disk comprises a central through hole.

**Patentansprüche**

1. Drosselkörper, umfassend:

   zumindest eine erste Scheibe, die zumindest einen Einlass (110) und zumindest einen Auslass (120) aufweist, die einen Strömungsweg definieren, und
   zumindest eine zweite Scheibe, die keinen Strömungsweg aufweist, die auf beiden Seiten der besagten zumindest einen ersten Scheibe platziert ist; und **dadurch gekennzeichnet, dass**
   der Drosselkörper nicht gesintert ist, und
   der Einlass (110), der Auslass (120) und der besagte Strömungsweg ein Durchgangsloch (100)umfassen, das in der besagten zumindest einen ersten Scheibe gebildet ist und durch die zweite Scheibe unmittelbar über und unter der ersten Scheibe begrenzt ist,
   wobei eine Querschnittsfläche des Strömungswegs durch eine Dicke der zumindest einen ersten Scheibe festgelegt wird.

2. Drosselkörper nach Anspruch 1, wobei das Durchgangsloch (100) durch Ätzung gebildet ist.

3. Drosselkörper nach Anspruch 1, wobei eine Querschnittsfläche des Strömungswegs konstant ist.

4. Drosselkörper eines beliebigen vorhergehenden Anspruchs, wobei die zweite Scheibe einen Innendurchmesser aufweist, der sich nach außen gerichtet über den besagten zumindest einen Einlass (110) der besagten ersten Scheibe hinaus erstreckt und einen Außendurchmesser aufweist, der sich nach innen gerichtet des besagten zumindest einen Auslasses (120) der besagten ersten Scheibe befindet, um einem Gas zu gestatten in den Strömungsweg einzutreten und aus diesem auszutreten.

5. Drosselkörper nach einem beliebigen vorhergehenden Anspruch, wobei die besagte zumindest eine erste Scheibe ein mittiges Durchgangsloch umfasst.

6. Drosselkörper nach Anspruch 5, wobei das besagte mittige Durchgangsloch der besagten ersten Scheibe vom besagten Durchgangsloch (100) beabstandet ist, das den besagten Einlass (110), den besagten Auslass (120) und den besagten Strömungsweg umfasst.

7. Drosselkörper nach einem beliebigen vorhergehenden Anspruch, wobei die besagte zumindest eine zweite Scheibe ein mittiges Durchgangsloch umfasst.

**Revendications**

1. Un réducteur de débit comprenant :

   au moins un premier disque qui a au moins une entrée (110) et au moins une sortie (120) définissant un chemin d'écoulement, et
   au moins un second disque, qui n'a pas de chemin d'écoulement, placé de chaque côté dudit au moins premier disque ; et **caractérisé en ce que**,
   le réducteur de débit est non fritté, et
   l'entrée (110), la sortie (120) et ledit chemin d'écoulement comprend un trou traversant (100) qui est formé dans ledit au moins premier disque et est lié par le second disque immédiatement au-dessus et au-dessous du premier disque, dans lequel une section transversale du chemin d'écoulement est contrôlée par une épaisseur du au moins premier disque.

2. Le réducteur de débit de la revendication 1, dans lequel le trou traversant (100) est formé par gravure.

3. Le réducteur de débit de la revendication 1, dans lequel une section transversale du chemin découlement est constante.

4. Le réducteur de débit selon l'une quelconque des revendications précédente, dans lequel le second disque a un diamètre intérieur qui s'étend vers l'extérieur au-delà de ladite au moins une entrée (110) dudit premier disque, et un diamètre extérieur qui est à l'intérieur de ladite au moins une sortie (120) dudit premier disque, pour permettre au gaz d'entrer et de sortir du chemin d'écoulement.

5. Le réducteur de débit de selon l'une quelconque des revendications précédente, dans lequel ledit au moins premier disque comprend un trou traversant central.

6. Le réducteur de débit la revendication 5, dans lequel ledit trou traversant central dudit premier disque est espacé dudit trou traversant (100) comprenant ladite entrée (110), ladite sortie (120) et ledit chemin d'écoulement.

7. Le réducteur de débit selon l'une quelconque des revendications précédente, dans lequel ledit au moins second disque comprend un trou traversant central.

FIG. 1(a)-(c)

FIG. 2

**1st Functional Criterion 2 with New Restrictor: Flow Data on 6 Gases**

*Illustrates Anticipated Reduced Conversion Factor Between Gases, Fugasity PCB, SHR Confidential. DTM & CLM 2004.1.15*

| Gas | Visc. | Mol Wt |
|---|---|---|
| N2: | 100% | 100% |
| SF6: | 88% | 521% |
| O2: | 115% | 114% |
| CF4: | 99% | 226% |
| He: | 111% | 14% |
| Ar: | 129% | 143% |

MFC consists of Setra CDGs, Diffusion Bonded Flow Disks, Stac Piezo and Fugasity PCB Operating In Closed Loop Control Mol Bloc (with Multi Gas Calibrations) is in Series with MFC and is Used a Flow Reference. MFC is exhasusting to near vacuum.

**FIG.3**

FIG. 4(a)-(c)

## Restrictor Configuration Summary

| Config. Number | SCCM@FS 800 Torr | SCCM@FS 270 Torr | Number of Disks | Number of Flow Paths | Restrictor Thickness |
|---|---|---|---|---|---|
| 1 | **38** | 4 | 8 | 1 | 0.076" |
| 1.5 | 100 | 10 | 8 | 3 | 0.076 |
| 2 | **300** | **35** | 8 | 8 | 0.076 |
| 2.5 | 900 | 100 | 8 | 24 | 0.076 |
| 3 | **2,500** | **300** | 8 | 66 | 0.076 |
| 4 | **10,000** | 1,100 | 26 | 264 | 0.076 |
| 5 | 20,000 | **2,500** | 15 | 120 | 0.076 |
| 6 | 80,000 | **10,000** | 42 | 480 | 0.126 |

Note: Anticipated applications are shown in bold and underlined print.

FIG.5

EP 2 365 412 B1

## Pressure Drop Curves for a Porous Metal Restrictor and a Tube Restrictor
Both Restrictor Display the Desired Non-linearity, The Tube Restrictor was used in Demo MFC #21, DTM, Feb. 4, 2003

FIG.6

EP 2 365 412 B1

**Performance Variation for 10 Restrictors, 0.025mm Thick Disks**
STEC Confidential, SHR, 8/28/2003

FIG. 7

## Pre-Diffusion Bonding "Vapor" Flow Disk Flow Performance and Variation
SHR Confidential. Ten Vapor Flow Disks. Target Full Sale Pressure = 300 Torr. Target Non-Linearity > 0.90

Variation Range < +/- 5%. Non Linearity = 0.92 (Same as Vacuum Disks). Flow at 300 Torr ~ 600 SCCM/Disk

- ◇ DUT #1
- ◇ DUT #2
- ◇ DUT #3
- ◇ DUT #4
- ◇ DUT #5
- ◇ DUT #6
- ◇ DUT #7
- ◇ DUT #8
- ◇ DUT #9
- ◇ DUT #10

**FIG. 8 A**

EP 2 365 412 B1

Flow vs Inlet Pressure (N2)

FIG. 8B

Inlet Pressure Vs Mass Flow for 5 Sintered Metal Restrictors
Fugasity Confidential, DTM, 1/25/2003

FIG. 9

Flow Curve of the First Diffusion Bonded 300 SCCM Disk Restictor

Design Targets were 300 SCCM at 800 Torr and > 0.9 Non-Linearity Factor . SHR Confidential, 2003/12/4

Actual Device Delivered 300 SCCM at 790 Torr and Displayed a Linearity Factor of 0.92

FIG.10

Post Diffusion Bonded Flow Curve for a 900 SCCM Restrictor

Non-Linearity Target and Actual was 0.92

◇ Restrictor #37

Design Flow was 900 SCCM at 800 Torr Inlet Pressure

Inlet Pressure, Torr

Flow of N2, SCCM

| Flow sccm | Upstream Torr | Downstream Torr |
|---|---|---|
| 1000 | 853.7 | 65 |
| 900 | 805 | 59 |
| 800 | 765.6 | 63 |
| 700 | 701.9 | 47 |
| 600 | 644.5 | 41 |
| 500 | 583.8 | 34 |
| 400 | 517.4 | 27 |
| 300 | 442.7 | 20 |
| 200 | 366.4 | 10.5 |
| 100 | 243.9 | 2.4 |
| 50 | 166.0 | 0.6 |
| 25 | 112.6 | 0.5 |
| 10 | 69 | 0.4 |
| 0 | 0 | 0 |

FIG. 11

Simple Test Set: Restrictor Exhaust Connected to Vacuum Pump. Inlet was air at 650 Torr (Reno Atmoshere)
Flow Was Estimated from Pump Chamber Pressure Steady State Value

Restrictor Configuration 2.6 — *3.0*      Restrictor Configuration 2.5     Restrictor Configuration 2.6 — *2.0*

2.5 SLM N2 @ 800 Torr     900 SCCM N2 @ 800 Torr     300 SCCM N2 @ 800 Torr

| 3 Disk 66 Paths | Cmbr Press Torr | Est Flow SCCM, Air | 3 Disk 24 Paths | Cmbr Press Torr | Est Flow SCCM, Air | 1 Disk 8 Paths | Cmbr Press Torr | Est Flow SCCM, Air |
|---|---|---|---|---|---|---|---|---|
| 21 | 101.96 | 1,552.3 | 31 Dusted | 31.35 | 422.2 | 11 | 9.37 | 139.4 |
| 22 | 107.84 | 1,661.7 | 32 | 38.58 | 522.4 | 12 | 9.57 | 141.8 |
| 23 | 101.1 | 1,536.5 | 33 | 38.45 | 520.6 | 13 | 8.81 | 132.6 |
| 24 | 107.45 | 1,654.3 | 34 | 39.1 | 529.8 | 14 | 9.43 | 140.1 |
| 25 | 106.9 | 1,644.0 | 35 | 39.1 | 529.8 | 15 | 10.08 | 148.0 |
| 26 | 107.98 | 1,664.3 | 36 | 40.31 | 546.9 | 16 | 9.05 | 135.5 |
| 27 | 108.59 | 1,675.8 | 37 | 40.6 | 551.0 | 17 | 10.02 | 147.3 |
| 28 | 109.49 | 1,692.8 | 38 | 36.46 | 492.7 | 18 | 10.22 | 149.7 |
| 29 | 108.95 | 1,682.6 | 39 | 41.79 | 568.0 | 19 | 10.09 | 148.1 |
| 210 | 105.3 | 1,614.1 | 310 | 43.46 | 592.0 | 110 | 9.42 | 140.0 |
| 211 | 107.96 | 1,663.9 | 311 | 40.9 | 555.3 | 111 | 8.76 | 132.0 |
| 212 | 105.6 | 1,619.7 | 312 | 40.89 | 555.2 | 112 | 10.23 | 149.8 |
| 213 | 99.53 | 1,507.8 | 313 | 40.08 | 543.6 | 113 | 8.29 | 126.3 |
| 214 | 99.55 | 1,508.2 | 314 | 37.84 | 512.0 | 114 | 8.85 | 133.1 |
| | Avg Flow | 1,619.9 | | Avg Flow | 539.9 | | Avg Flow | 140.3 |
| | Std Dev | 63.46 | | Std Dev | 24.90 | | Std Dev | 7.32 |

For More Percise Testing Requested Teflon "O" Rings are Needed or Testing Will Damage Restrictors
DTM@SHR, 2003/12/23

FIG. 12 A

## Restrictor to Restrictor Variability For Restrictor Catagories C1.0, C1.5 and C5.0

SHR Confidential, 2004.1.23, DTM and CM

| Style C1.0 Restrictor D.U.T. | Measured Air Flow sccm | Fixed Inlet Press torr | | Style C1.5 Restrictor D.U.T. | Measured Air Flow sccm | Fixed Inlet Press torr | | Style C1.5 Restrictor D.U.T. | Fixed N2 Flow sccm | Measured Inlet Press torr | |
|---|---|---|---|---|---|---|---|---|---|---|---|
| 41 | 25.74 | 630.1 | | 51 | 62.92 | 590.4 | | 61 | 2,492.5 | 318 | |
| 42 | 26.8 | 629.1 | | 52 | 62.41 | 590.9 | | 62 | 2,492.6 | 317 | |
| 43 | 26.2 | 629.7 | · | 53 | 62.66 | ·590.6 | | 63 | 2,484.8 | 313 | |
| 44 | 25.06 | 631.0 | | 54 | 65.24 | 587.7 | | 65 | 2,491.8 | 318 | |
| 45 | 26.75 | 629.2 | Temp | 55 | 65.3 | 587.7 | Temp | 67 | 2,492.2 | 321 | Temp |
| 46 | 25.67 | 630.4 | C | 56 | 66.23 | 586.8 | C | 68 | 2,492.4 | 320 | C |
| 47 | 25.01 | 630.4 | 23.4 | 57 | 64.94 | 588.3 | 23.1 | 69 | 2,492.0 | 318 | 22.8 |
| 48 | 24.96 | 631.3 | | 58 | 65.74 | 587.4 | | 610 | 2,492.4 | 294 | |
| 49 | 25.74 | 630.6 | | 59 | 61.52 | 592.0 | | 611 | 2,490.3 | 321 | |
| 410 | 25.24 | 630.9 | | 510 | 63.71 | 589.5 | | 612 | 2,489.6 | 322 | |
| 411 | 24.12 | 631.9 | | 511 | 62.91 | 590.5 | | 613 | 2,488.9 | 321 | |
| 412 | 25.69 | 630.2 | | 512 | 62.49 | 591.0 | | 614 | 2,488.4 | 320 | |
| 413 | 25.54 | 630.3 | | 513 | 62.68 | 590.7 | | | | | |
| 414 | 25.82 | 630.1 | | 514 | 68.68 | 584.1 | | | Std Dev | 7.2 | 2.3% |
| | | | | | | | | | Avg | 316.8 | |
| Std Dev | 0.61 | 2.42% | | Std Dev | 1.90 | 2.97% | | | | | |
| Avg Air Flow | 25.28 | | | Avg Air Flow | 64.10 | | | Est Flow (sccm) at 300 Torr = | | 2,241 | |
| Est Flow (sccm) at 800 Torr = | | 40.19 | | Est Flow (sccm) at 800 Torr = | | 116.1 | | 63* | 2,494.3 | 285 | |
| | | | | | | | | 64* | 2,491.8 | 315 | |

*disk were visual damaged when inspected

FIG.12 B

**1st Functional Criterion 2 with New Restrictor: Flow Data on 6 Gases**

Illustrates Anticipated Reduced Conversion Factor Between Gases, Fugasity PCB. SHR Confidential. DTM & CLM 2004.1.15

Legend:
- N2: 100%,100%
- SF6: 88%,521%
- O2: 115%,114%
- CF4: 99%, 226%
- He: 111%,14%
- Ar: 129%, 143%
- Gas: Visc. Mol Wt

X axis: Flow, SCCM
Y axis: Inlet Pressure to Restrictor as Measured by CDG P1, Torr

MFC consists of Setra CDGs, Diffusion Bonded Flow Disks, Stec Piezo and Fugasity PCB Operating in Closed Loop Control Mol Bloc (with Multi Gas Calibrations) is in Series with MFC and is Used a Flow Reference. MFC is exhasusting to near vacuum.

FIG. 13

EP 2 365 412 B1

FIG. 14

**EP 2 365 412 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 54810904 P
- US 10652506 B, Daniel Mudd
- US 60406511 B